# EUROPÄISCHE PATENTANMELDUNG

(11) **EP 0 686 827 A2**
(43) Veröffentlichungstag der Anmeldung: **13.12.1995**
(21) Anmeldenummer: 95108902.8
(22) Anmeldetag: 09.06.1995
(51) Int. Cl.: G01B 11/00

(54) **Vorrichtung zur berührungslosen Bestimmung des Oberflächenprofils eines Werkstücks**

(30) Priorität: 10.06.1994 DE 4420293
(71) Anmelder: Messelektronik Dresden GmbH, D-01099 Dresden (DE)
(72) Erfinder: Friedemann, Böttger, D-01129 Dresden (DE); Bernd, Emmerich, D-01217 Dresden (DE); Gerhard, Ruder, D-01474 Pappritz (DE)
(74) Vertreter: COHAUSZ HASE DAWIDOWICZ & PARTNER

(57) **Zusammenfassung**

Die Erfindung beschreibt eine Vorrichtung zur berührungslosen Bestimmung des Profils, insbesondere der Rauheit von Oberflächen eines insbesondere bandförmigen Werkstücks (2) mittels eines hochgenauen Abstandmeßgerätes (A), dessen Laserstrahl (3) auf die Oberfläche des Werkstücks (2) gerichtet ist, wobei Mittel vorgesehen sind, die den gestreuten bzw. reflektierten Laserstrahl (4) optisch in zwei Lichtbündel zerlegen, wobei Photodetektoren (6) die zwei Lichtbündel in entsprechende elektrische Signale umformen und mittels einer nachgeschalteten Elektronik (7) die Signale auswertbar und der Abstand zwischen Werkstück (2) und der Abtastapparatur (A) bestimmtbar ist, und für eine bahnenförmige Bestimmung des Oberflächenprofils des Werkstücks (2) das Werkstück (2) und der abtastende Laserstrahl (3) sich während des Meßvorgangs relativ zueinander bewegen, wobei mittels eines Sensors der Abstand zwischen der Oberfläche des Werkstücks (2) und der Vorrichtung ermitteltbar ist und Mittel vorgesehen sind, die den ermittelten Abstandswert mit zwei, ein Abstandsintervall definierenden Abstandsgrenzwerten vergleicht, wobei die Vorrichtung das Oberflächenprofil des Werkstücks (2) nur dann ermittelt, wenn der ermittelte Abstandswert wertemäßig zwischen den Abstandsgrenzwerten liegt.

## Beschreibung

Die Erfindung betrifft eine Vorrichtung zur berührungslosen Bestimmung des Profils, insbesondere der Rauheit von Oberflächen eines insbesondere bandförmigen Werkstücks mittels eines hochgenauen Abstandmeßgerätes, dessen Laserstrahl auf die Oberfläche des Werkstücks gerichtet ist, wobei Mittel vorgesehen sind, die den gestreuten bzw. reflektierten Laserstrahl optisch in zwei Lichtbündel zerlegen, wobei Photodetektoren die zwei Lichtbündel in entsprechende elektrische Signale umformen und mittels einer nachgeschalteten Elektronik die Signale auswertbar und der Abstand zwischen Werkstück und der Abtastapparatur bestimmtbar ist, und für eine bahnenförmige Bestimmung des Oberflächenprofils des Werkstücks das Werkstück und der abtastende Laserstrahl sich während des Meßvorgangs relativ zueinander bewegen.

Oberflächen von Werkstücken müssen für ihre weitere Verarbeitung bestimmte Gütekriterien erfüllen. Soll ein gewalztes Stahlblech lackiert werden, so wird z.B. eine bestimmte Oberflächenrauheit benötigt, damit der Farbstoff genügend am Blech haftet und einen ganz bestimmten Glanz erhält. Um die Oberflächenrauheit bei der Produktion von Stahlblechen in Kaltwalzwerken kontrollieren zu können, muß der Walzprozeß in regelmäßigen Abständen angehalten und die Rauheit mittels eines üblichen Tastschnittgerätes im Stillstand kontrolliert werden. Dieses Verfahren zur Bestimmung der Oberflächenrauheit bzw. deren Qualität ist nicht effektiv, da es nicht genügend Vergleichswerte liefert um die Oberflächenrauheit der gesamten Oberfläche des Werkstucks hinreichend zu bestimmen. Auch wirkt sich das Anhalten des Walzprozesses nachteilig auf die Qualität des gewalzten Stahles aus, da bestimmte Stellen des Stahlblechs durch die Walzen länger druckbeaufschlagt werden.

Aus der DE 42 29 313 ist ein Verfahren und eine Vorrichtung zur hochgenauen Abstandsmessung von Oberflächen bekannt. Hierbei wird ein Laserstrahl auf die zu überprüfende Oberfläche gerichtet, von der der Laserstrahl gestreut bzw. reflektiert wird. Das gestreute/reflektierte Lichtbündel wird dabei mit optischen Mitteln in zwei Lichtbündel mit näherungsweise derselben Flächenverteilung der Intensitäten quer zu ihrer Abstrahlrichtung zerlegt. Unter diesen Voraussetzungen kommt es zu einem Intensitätsverhältnis der beiden Teilbündel, welches von der Hauptstrahlrichtung des von der Oberfläche gestreuten/reflektierten Lichtbündels abhängig ist. Die beiden Lichtbündel werden photodiodisch detektiert, wobei die Ausgangssignale ein Maß für die Rauhigkeit der geprüften Oberfläche ist.

Werkstücke, die an der Vorrichtung vorbei bewegt werden, neigen in der Regel zum Schwingen, wobei die Schwingungsrichtung in Richtung der abtastenden Vorrichtung liegt. Das zu überprüfende Werkstück muß jedoch bei der hochgenauen Abstandsmessung gemäß der Vorrichtung der DE 42 29 313 stets in Ruhe sein, bevor mit der Messung begonnen werden kann. Die Vorrichtung gemäß der DE 42 29 313 kann daher nicht bei Wälzanlagen zur Bestimmung des Oberflächenprofils eines Werkstücks eingesetzt werden, da ein Anhalten der Walzen nicht nur die Effektivität der Produktionsanlage herabsetzen, sondern es zusätzlich zu Qualitätsmängeln im Bereich der Walzanlagestellen beim zu walzenden Werkstück kommen würde.

Der Einsatz von zusätzlichen Walzen, mittels derer das Schwingen des Werkstücks verhindert werden könnte ist oft funktionstechnisch nicht realisierbar und zudem mit hohen Kosten verbunden.

Aufgabe der Erfindung ist es daher eine Vorrichtung zur berührungslosen Bestimmung des Oberflächenprofils eines Werkstücks bereitzustellen, wobei auch bei in Richtung der Meßvorrichtung schwingenden Werkstücken die Oberfläche bzw. das Oberflächenprofil des Werkstücks exakt vermessen werden kann. Dies soll mit wenigen einfach und kostengünstig herzustellenden Teilen realisiert werden, wobei durch die Vorrichtung bzw. durch den Meßvorgang die Qualität des Werkstücks bzw. der Werkstückoberfläche nicht gemindert werden soll.

Diese Aufgabe wird erfindungsgemäß dadurch gelöst, daß mittels eines Sensors der Abstand zwischen der Oberfläche des Werkstücks und der Vorrichtung ermitteltbar ist und Mittel vorgesehen sind, die den ermittelten Abstandswert mit zwei, ein Abstandsintervall definierenden Abstandsgrenzwerten vergleicht, wobei die Vorrichtung das Oberflächenprofil des Werkstücks nur dann ermittelt, wenn der ermittelte Abstandswert wertemäßig zwischen den Abstandsgrenzwerten liegt. Befindet sich die Oberfläche des Werkstücks in dem vordefinierten Abstandsbereich, ist sichergestellt, daß die von der Vorrichtung ermittelten Oberflächenprofildaten des Werkstücks exakt und somit verwertbar sind.

Die Vorrichtung ist dazu vorteilsmäßig mittels einer Daten- und Steuerleitung mit einer elektronischen Datenverarbeitungsanlage in elektrischer Verbindung, wobei die Datenverarbeitungsanlage zudem mit der das Werkstück transportierenden Transportanlage in elektrischer Verbindung ist. Die Vorrichtung sendet ein bestimmtes Signal an die Datenverarbeitungsanlage, wenn das Werkstück im vorher definierten Abstandsbereich zum Abstandsmeßgerät ist. Dieses Signal kann z.B. von einem zusätzlichen Sensor bereitgestellt werden. Das Signal ist vorteilsmäßig ein Trigger-Signal, welches den Meßvorgang zur Ermittlung des Oberflächenprofils des Werkstücks startet. Auch kann die Vorrichtung oder der zusätzliche Sensor das den Startvorgang auslösende Trigger-Signal direkt an das Abstandsmeßgerät senden, wodurch ebenfalls die Messung des Oberflächenprofils des Werkstücks gestartet wird.

Durch die Vorrichtung selbst oder den zusätzlichen Sensor wird stets sichergestellt, daß das Oberflächenprofil des am Abstandsmeßgerät vorbeigeführten Werkstücks nur dann gemessen wird, wenn das Werkstück in einem genau definierten Abstand zu dem Abstandsmeßgerät ist. In diesem Fall wird der Meßvorgang sofort ausgelöst. Da die Messung bei sehr hohen Bandgeschwindigkeiten nur einige Millisekunden dauert, ist die Abstandsänderung zwischen Abstandsmeßgerät und Werkstück innerhalb der Meßzeit vernachläßigbar. Auch kann vorteilsmäßig durch den zusätzlichen Sensor ein rechnerischer Abgleich der vom Abstandsmeßgerät gemessenen Profildaten vorgenommen werden, so daß durch das schwingende Werkstück bedingte Offset-Fehler eliminiert werden können.

Eine derartige Vorrichtung erhöht die Effektivität des Produktionsprozesses enorm, da ein Anhalten des Produktionsprozesses ist oder zusätzliche Dämpfungsmaßnahmen nicht erforderlich sind, was die Produktionskosten erheblich verringert. Zudem ermittelt die Vorrichtung exakte Werte über das Oberflächenprofil des Werkstücks, wodurch sich vorteilsmäßig sämtliche Oberflächenqualitäts- bzw. Rauheitsparameter bestimmen bzw. berechnen lassen. Auch ist eine Bestimmung der Spitzenzahl P_{c} möglich, die gerade für die weiterverarbeitende Industrie ein wichtiges Gütekriterium zur Bewertung der Oberflächenbeschaffenheit ist. Eine derartige Vorrichtung ist nicht nur klein und kompakt in ihren Abmessungen, sondern ist zudem schmutz- und stoßunempfindlich.

Die elektronische Datenverarbeitungsanlage erhält dabei vorteilsmäßig von der Transport- bzw. Walzanlage die für die Abstandsmessung relevanten Daten, insbesondere die Geschwindigkeit und/oder Abmessungen und/oder das Material und/oder die Temperatur des Werkstücks. Durch die Kopplung dieser drei Vorrichtungen wird eine optimale Ausnutzung der Produktionsanlage erzielt. Mittels der Datenverarbeitungsanlage und der auf ihr laufenden Software wird das hochgenaue Abstandsgerät gesteuert, die Profildaten im Speicher der Datenverarbeitungsanlage gespeichert, aufgearbeitet und anschließend optisch auf einem Anzeigemedium dargestellt. Auch kann das Meßergebnis auf externe Speichermedien ausgelagert oder auf einem Drucker ausgegeben werden.

Mittels der Datenverabeitungsanlage wird aus den ermittelten Daten die Spitzenzahl P_{c} bestimmt und angezeigt, wobei sich die Spitzenzahl P_{c} aus der Anzahl der Erhöhungen bzw. Vertiefungen des Profils pro Längenabschnitt bestimmt, wobei nur die Erhöhungen bzw. Vertiefungen gezählt werden, die außerhalb eines Toleranzbereichs eines bestimmten Mittelwertes liegen. Zusätzlich bestimmt die Datenverarbeitungsanlage sämtliche Parameter des Oberflächenprofils, die für die Bestimmung der Oberflächenrauheit des Werkstücks nötig sind. Werden Rauheits- bzw. Oberflächenprofilparameter von der Datenverarbeitungsanlage ermittelt, die nicht den vorgegebenen Werten entsprechen, so kann eine Fehleranalyse durch die Datenverarbeitungsanlage vorgenommen werden. Wird dabei von der Datenverarbeitungsanlage festgestellt, daß die für die Oberflächengüte des Werkstücks verantwortlichen Walzen nicht mehr den geforderten Anforderungen entsprechen, so löst die Datenverarbeitungsanlage einen Alarm aus, bzw. stoppt den Produktionsprozeß und gibt Anweisungen aus, daß die entsprechende Walze ausgewechselt werden muß. Auch kann aus der zeitlich sich verschlechternden Güte der Oberflächenrauheit der genaue Zeitpunkt zum Auswechseln der entsprechenden Walzen bestimmt werden, wodurch die für den Produktionsprozeß notwendigen Wartungs- und Instandsetzungsarbeiten frühzeitig eingeleitet werden können, so daß die Produktionsstillstandszeit minimiert wird.

Die Datenverarbeitungsanlage steuert dabei vorteilsmäßig das hochgenaue Abstandsmeßgerät, wobei die Steuer- bzw. Regelparameter für den gesamten Meßvorgang an der Datenverarbeitungsanlage eines geeigneten Eingabemediums einstellbar sind. Die Datenverarbeitungsanlage kann dazu zusätzlich die Steuer- bzw. Regelparameter für den Meßvorgang anhand der von der Transport- bzw. Walzanlage übermittelten Daten selbständig bestimmen. Hierdurch werden Fehler, die durch falsche Eingaben des Bedienungspersonals gemacht werden, weitgehend ausgeschlossen.

Auch ist es vorteilsmäßig, wenn mehrere Vorrichtungen zur Bestimmung des Oberflächenprofils des Werkstücks in Abständen nebeneinander angeordnet sind, so daß mehrere Oberflächenprofilbahnen bestimmbar sind. Ebenfalls ist es vorteilsmäßig, wenn mehrere Vorrichtungen in Abständen hintereinander anordbar sind, so daß derselbe Oberflächenabschnitt des Werkstücks während des gesamten Fertigungsvorganges mehrfach überprüfbar ist. Die gleichzeitige Kontrolle des Oberflächenprofils des Werkstücks an mehreren Stellen erlaubt eine repräsentative Aussage über die gesamte Oberflächenbeschaffenheit bzw. das Profil des Werkstücks.

Da sich das Werkstück in ständiger Schwingung befindet, ist es vorteilsmäßig, daß das hochgenaue Abstandsmeßgerät und der zusätzliche Sensor unmittelbar hinter einer Walze oberhalb oder unterhalb des Werkstücks angeordnet sind, je nach dem welche Werkstückoberflächenseite überprüft werden soll, da direkt hinter den Walzen das Werkstück durch diese fest eingespannt ist und keine großen Schwingungsamplituden zu erwarten sind.

Auch ist es zweckmäßig, wenn das hochgenaue Abstandsmeßgerät und der zusätzliche Sensor mittels einer Einrichtung über das Werkstück, insbesondere quer zur Transportbewegung des Werkstücks verfahrbar sind. Hierdurch ist es möglich, während des Walzvorganges das Oberflächenprofil des Werkstücks über die gesamte Walzenbreite nacheinander zu bestimmen bzw. nur dort das Oberflächenprofil des Werkstücks zu prüfen, wo prozeßbedingt die Walzen einem erhöhten Verschleiß unterliegen.

Auch ist es von Vorteil, wenn das hochgenaue Abstandsmeßgerät und der zusätzliche Sensor Kalibriereinrichtungen haben, die den erforderlichen Abstand zum Werkstück mittels Elektromotoren, insbesondere Schritt- oder Servomotoren einstellen, wobei die Datenverarbeitungsanlage den Kalibrierungsvorgang steuert. Durch die Automatisierung des Kalibrierungsvorgangs wird eine Verkürzung der Prozeßstillstandszeit erzielt, wodurch das sonst benötigte teure und hochqualifizierte Personal für andere Tätigkeiten abgestellt werden kann.

Die erfindungsgemäße Vorrichtung kann für die Bestimmung des Oberflächenprofils von Werkstücken überall dort eingesetzt werden, wo das zu prüfende Werkstück den Laserstrahl ausreichend reflektiert.

Ein mögliches Ausführungsbeispiel der erfindungsgemäßen Vorrichtung wird nachfolgend anhand der Zeichnungen näher erläutert.

Es zeigen:
- Fig. 1: Ein hochgenaues Abstandsgerät mit einem sich unter der Abtastvorrichtung hinwegbewegenden Werkstück.
- Fig. 2: Ein Blockschaltbild mit den drei Komponenten Abstandsmeßgerät, Datenverarbeitungsanlage und Leitstand.
- Fig. 3: Abstandsmeßgerät mit Kalibrierungseinrichtung.
- Fig. 4: Ein quer zur Transportbewegung des Werkstücks verfahrbares Abstandsmeßgerät.

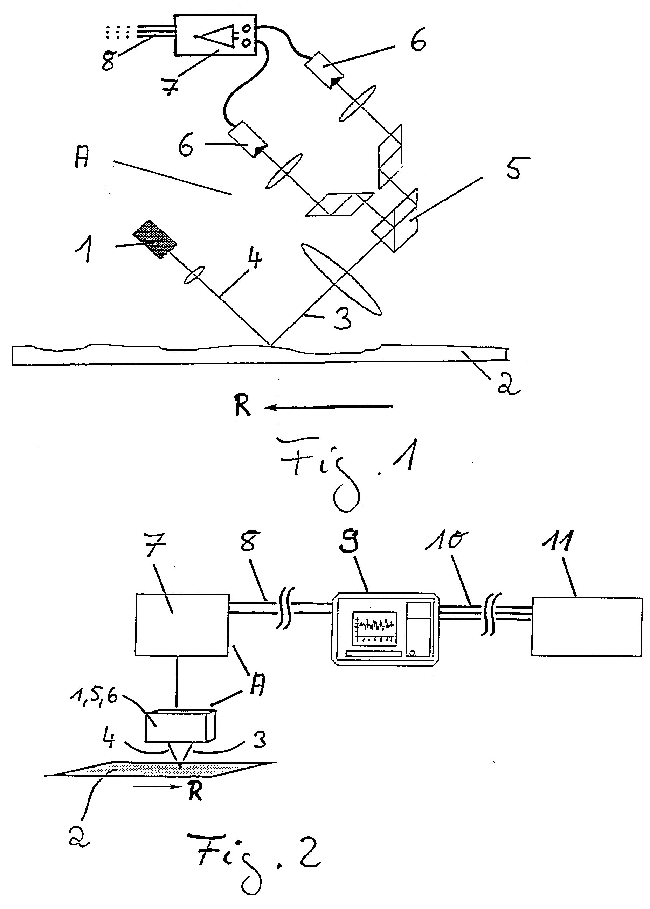

Die Fig. 1 zeigt ein hochgenaues Abstandsmeßgerät A, welches mittels eines Lasers 1 einen Laserstrahl 3 erzeugt, der auf die eine Oberfläche des Werkstücks 2 gerichtet ist und von dieser reflektiert wird. Der reflektierte Licht- bzw. Laserstrahl 4 wird mittels einer Optik 5 in zwei Lichtstrahlen aufgespalten, die jeweils von einem Fotodetektor 6 in elektrische Signale umgewandelt werden und einer nachgeschalteten Elektronik 7 zugeführt werden. Die nachgeschaltete Elektronik 7 vergleicht die elektrischen Signale der Fotodetektoren 6 und übermittelt die gemessenen Abstands- bzw. Profildaten über die Datenleitungen 8 an die nicht dargestellte Datenverarbeitungsanlage 9 . Das Werkstück 2 bewegt sich dabei in Richtung R.

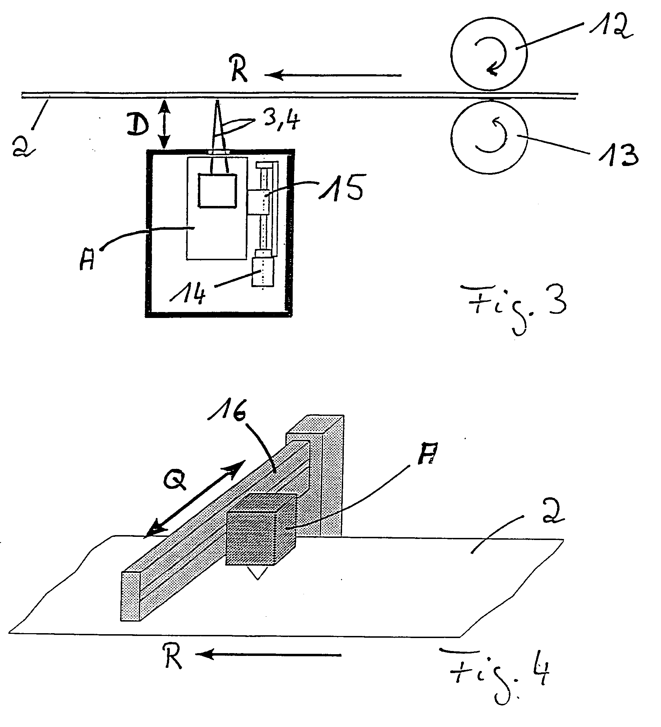

Die Fig. 2 stellt ein Blockschaltbild dar, wobei das hochgenaue Abstandsmeßgerät A über Daten und Steuerleitungen 8 mit der Datenverarbeitungsanlage 9 verbunden ist, und die Datenverarbeitungsanlage 9 zusätzlich mittels elektrischer Daten- bzw. Steuerleitungen 10 mit dem Prozeßleitstand 11 in Verbindung ist. Die Datenverarbeitungsanlage 9 oder das hochgenaue Abstandsmeßgerät A kann zusätzlich mittels nicht dargestellter elektrischer Leitungen mit einem ebenfalls nicht dargestellten zusätzlichen Sensor in Verbindung sein, wobei der zusätzliche Sensor ein bestimmtes Signal an die

Datenverarbeitungsanlage 9 oder das Abstandsmeßgerät A aussendet, wenn das Werkstück 2 in einem bestimmten Abstandsbereich zum Abstandsmeßgerät A ist. Das bestimmte Signal ist dabei ein Trigger-Signal, welches den Meßvorgang startet. Das bestimmte Signal kann auch vom Abstandsmeßgerät A selbst gesendet werden.

Die Figur 3 zeigt das Abstandsmeßgerät A, welches in einer Schutzbox ist, wobei das Abstandsmeßgerät A über eine Kalibriereinrichtung 15 verfügt, mittels derer der Abstand D zwischen dem Werkstück 2 und dem Abstandsmeßgerät A einstellbar ist. Die Kalibriereinrichtung 15 verfügt dabei über einen elektrischen Motor 14, mittels dem der Abstand D automatisch einstellbar ist. Das Werkstück 2 wird von den Walzen 12 bzw. 13 druckbeaufschlagt und zusätzlich in Richtung R bewegt. Dabei hat die Walze 13 ein bestimmtes Oberflächenprofil, welches in die untere Seite des Werkstücks 2 eingedrückt wird.

Die Figur 4 zeigt das hochgenaue Abstandsmeßgerät A, welches an einer Schiene 16 angelagert ist und mittels eines nicht dargestellten Antriebes quer zur Transportrichtung R des Werkstücks 2 in Richtung Q verfahrbar ist. Das Messen des Oberflächenprofils ist somit über die gesamte Breite des Werkstücks 2 möglich.

## Patentansprüche

1. Vorrichtung zur berührungslosen Bestimmung des Profils, insbesondere der Rauheit von Oberflächen eines insbesondere bandförmigen Werkstücks (2) mittels eines hochgenauen Abstandmeßgerätes (A), dessen Laserstrahl (3) auf die Oberfläche des Werkstücks (2) gerichtet ist, wobei Mittel vorgesehen sind, die den gestreuten bzw. reflektierten Laserstrahl (4) optisch in zwei Lichtbündel zerlegen, wobei Photodetektoren (6) die zwei Lichtbündel in entsprechende elektrische Signale umformen und mittels einer nachgeschalteten Elektronik (7) die Signale auswertbar und der Abstand zwischen Werkstück (2) und der Abtastapparatur (A) bestimmtbar ist, und für eine bahnenförmige Bestimmung des Oberflächenprofils des Werkstücks (2) das Werkstück (2) und der abtastende Laserstrahl (3) sich während des Meßvorgangs relativ zueinander bewegen, **dadurch gekennzeichnet,** daß mittels eines Sensors der Abstand zwischen der Oberfläche des Werkstücks (2) und der Vorrichtung ermitteltbar ist und Mittel vorgesehen sind, die den ermittelten Abstandswert mit zwei, ein Abstandsintervall definierenden Abstandsgrenzwerten vergleicht, wobei die Vorrichtung das Oberflächenprofil des Werkstücks (2) nur dann ermittelt, wenn der ermittelte Abstandswert wertemäßig zwischen den Abstandsgrenzwerten liegt.

2. Vorrichtung nach Anspruch 1, **dadurch gekennzeichnet,** daß die Vorrichtung und/oder der Sensor mittels mindestens einer Daten- und Steuerleitung (8) mit einer elektronischen Datenverarbeitungsanlage (9) in elektrischer Verbindung ist, und die Datenverarbeitungsanlage (9) mit der das Werkstück (2) transportierenden Transportanlage (11) in elektrischer Verbindung ist.

3. Vorrichtung nach Anspruch 1 und 2, **dadurch gekennzeichnet,** daß die elektronische Datenverarbeitungsanlage (9) von der Transport- bzw. Walzanlage (11) die für die Abstandsmessung relevanten Daten, insbesondere die Geschwindigkeit und/oder Abmessungen und/oder das Material und/oder die Temperatur des Werkstücks (2) erhält.

4. Vorrichtung nach einem der vorigen Ansprüche, **dadurch gekennzeichnet,** daß die Vorrichtung ein bestimmtes Signal an die Datenverarbeitungsanlage (9) aussendet, wenn das Werkstück (2) im vorher definierten Abstandsbereich zum Abstandsmeßgerät (A) ist.

5. Vorrichtung nach einem der vorigen Ansprüche, **dadurch gekennzeichnet,** daß der Sensor ein bestimmtes Signal an die Datenverarbeitungsanlage (9) aussendet, wenn das Werkstück (2) im vorher definierten Abstandsbereich zum Abstandsmeßgerät (A) ist.

6. Vorrichtung nach einem der vorigen Ansprüche, **dadurch gekennzeichnet,** daß das Signal ein Trigger-Signal ist, welches den Meßvorgang zur Ermittlung des Oberflächenprofils des Werkstücks (2) startet.

7. Vorrichtung nach einem der vorigen Ansprüche, **dadurch gekennzeichnet,** daß die Datenverarbeitungsanlage (9) mittels der von der Vorrichtung ermittelten und übertragenen Daten das Oberflächenprofil grafisch auf einem Anzeigegerät, insbesondere einem Monitor oder Drucker anzeigt.

8. Vorrichtung nach einem der vorigen Ansprüche, **dadurch gekennzeichnet,** daß die Datenverarbeitungsanlage (9) aus den ermittelten Daten die Spitzenzahl P_{c} bestimmt und anzeigt, wobei sich die Spitzenzahl P_{c} aus der Anzahl der Erhöhungen bzw. Vertiefungen des Profils des Werkstücks (2) pro Längenabschnitt bestimmt, wobei nur die Erhöhungen bzw. Vertiefungen gezählt werden, die außerhalb eines Toleranzbereichs eines bestimmten Mittelwertes liegen.

9. Vorrichtung nach einem der vorigen Ansprüche, **dadurch gekennzeichnet,** daß die Datenverarbeitungsanlage (9) sämtliche Parameter des Oberflächenprofils bestimmt bzw. berechnet, die für die Bestimmung der Oberflächenrauheit des Werkstücks (2) nötig sind.

10. Vorrichtung nach einem der vorigen Ansprüche, **dadurch gekennzeichnet,** daß die Datenverarbeitungsanlage (9) das hochgenaue Abstandsmeßgerät (A) steuert.

11. Vorrichtung nach einem der vorigen Ansprüche, **dadurch gekennzeichnet,** daß die Steuer- bzw. Regelparameter für den Meßvorgang an der Datenverarbeitungsanlage (9) einstellbar sind.

12. Vorrichtung nach einem der vorigen Ansprüche, **dadurch gekennzeichnet,** daß die Datenverarbeitungsanlage (9) die Steuer- bzw. Regelparameter für den Meßvorgang anhand der von der Transport- bzw. Walzanlage (11) übermittelten Daten selbsttätig bestimmt.

13. Vorrichtung nach einem der vorigen Ansprüche, **dadurch gekennzeichnet,** daß mehrere Vorrichtungen in Abständen nebeneinander angeordnet sind, so daß mehrere Oberflächenprofilbahnen bestimmbar sind.

14. Vorrichtung nach einem der vorigen Ansprüche, **dadurch gekennzeichnet,** daß mehrere Vorrichtungen in Abständen hintereinander anordbar sind, so daß der selbe Oberflächenabschnitt des Werkstücks (2) während des Fertigungsvorganges mehrfach überprüfbar ist.

15. Vorrichtung nach einem der vorigen Ansprüche, **dadurch gekennzeichnet,** daß das hochgenaue Abstandsmeßgerät (A) und der zusätzliche Sensor unmittelbar hinter einer Walze (13) oberhalb oder unterhalb des Werkstücks (2) angeordnet sind.

16. Vorrichtung nach Anspruch 15, **dadurch gekennzeichnet,** daß das hochgenaue Abstandsmeßgerät (A) und der zusätzliche Sensor insbesondere quer zur Transportbewegung (R) des Werkstücks (2) verfahrbar sind.

17. Vorrichtung nach einem der vorigen Ansprüche, **dadurch gekennzeichnet,** daß das hochgenaue Abstandsmeßgerät (A) und der zusätzliche Sensor Kalibriereinrichtungen (15) haben, die den erforderlichen Abstand zum Werkstück (2) mittels Elektromotoren (14), insbesondere Schritt- oder Servomotoren einstellen.

18. Vorrichtung nach Anspruch 17, **dadurch gekennzeichnet,** daß die Datenverarbeitungsanlage (9) den Kalibrierungsvorgang steuert.
